(19) Europäisches Patentamt

**European Patent Office**

**Office européen des brevets**

(11) Publication number: **0 108 371**
**B1**

(12) **EUROPEAN PATENT SPECIFICATION**

(45) Date of publication of patent specification: **11.01.89**

(21) Application number: **83110878.2**

(22) Date of filing: **31.10.83**

(51) Int. Cl.⁴: **F 24 F 11/04**

(54) **Means for controlling and/or measuring the flow of a running fluid.**

(30) Priority: **01.11.82 FI 823730**

(43) Date of publication of application:
**16.05.84 Bulletin 84/20**

(45) Publication of the grant of the patent:
**11.01.89 Bulletin 89/02**

(84) Designated Contracting States:
**AT BE DE FR GB NL SE**

(56) References cited:
**FR-A-2 082 292**
**FR-A-2 319 151**
**US-A-2 902 915**

(73) Proprietor: **Niskanen, Erkki Johannes**
**Länsituulentie 8 A 16**
**FI-02100 Espoo 10 (FI)**

(72) Inventor: **Niskanen, Erkki Johannes**
**Länsituulentie 8 A 16**
**FI-02100 Espoo 10 (FI)**

(74) Representative: **Zipse + Habersack**
**Kemnatenstrasse 49**
**D-8000 München 19 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention concerns a means for controlling and/or measuring the flow of a running fluid wherein the throttling of the flow is controlled utilizing the fluid's own differential pressure arising from the flow, i.e. a means as described in the preamble of claim 1.

In the Finnish patent No. 60069 is disclosed a means for stabilizing and/or controlling the flow of air and other gaseous fluids.

The means, or valve, of this kind consists of a cylindrical housing which has been mounted in a ventilation duct. To the housing has been axially and integrally adjoined a bearing housing, and to the front end thereof the bottom part of the valve. The spindle of the valve has been disposed to slide, supported by a linear bearing placed in the bearing housing. On the front end of the spindle has been mounted the main valve disc and on the rear end the control valve disc. The rear end of the bearing housing is closed with a seat ring or equivalent, said ring constituting together with the control valve disc, by the aid thereof, an opening of adjustable area. The main valve disc has also been provided with an opening. The bottom part of the valve and the main valve disc have been interconnected by an elastic annular membrane. In this manner, the bearing housing with its seat ring, the bottom of the valve and the main valve disc constitute an elastic cylindrical closed volume with an inlet and outlet opening. In conjunction with the main valve disc, in extension of the valve spindle, has been placed a spring, one end of which rests in the housing of the central part of the valve cover. The valve cover provided with a flow opening has been attached by threads to the body.

The operation of the means is based on the cascade phenomenon well-known in pneumatics. In the present instance, with moderate differential pressures, the relationship of the differential pressure in the closed volume and in the passage to the environment and to the differential pressure in the closed volume is in a certain way dependent on the ratio of the surface areas of the closed space's apertures. When for instance the pressure of the environment (in the room) decreases, the main valve disc, the spindle and the control valve disc move so that the opening defined by the seat ring diminishes until equilibrium is established between the dynamic and other forces acting on the main valve disc, and the volumetric flow is constant after the flow opening has increased to be consistent with the reduced differential pressure.

Selection of the volumetric flow range of the valve is made by turning the valve cover. Hereby, it moves axially in the direction of the spindle and acts through the counter-spring on the spindle and on the opening between the control valve disc and the seat and thereby on the equilibrium position of the valve and on the volumetric flow passing through the flow opening.

A drawback of the apparatus described in the foregoing is for instance that the selection of volumetric flow range has to be made by hand, by rotating the cover. When for instance the means is used as flat-specific ventilation controller in the ventilation system of a residential building, the dwellers must themselves adjust the means from its normal control position to the high-power position and back.

Furthermore, it is awkward to arrange on the means presented in the foregoing, in its enclosed volume, a separate projection for offsetting the opening adjacent to the main valve disc to be outside the means itself. If this is done, the projection will have to be connected to the moving and flow-controlling part of the valve, whereby the sensitivity of the means is substantially impaired. However, shifting the control opening of the main valve disc to be outside the means would afford possibilities to make the control by the means more versatile.

The object of the invention is to eliminate the drawbacks mentioned and, in general, to increase the control capability of the means, based on the cascade principle, meant for control and/or stabilizing of the flow of a running fluid, gas or liquid, and to enable almost simultaneously the measurement of the fluid's pressure and/or volumetric flow. These are achieved by the aid of those characteristic features of the invention which are stated in claim 1.

The means of the invention, or the equivalent means disclosed in the Patent No. 60069, may be used for measuring flow by mounting on the housing of the means directly or by the aid of supports a mechanical, electromechanical, magnetic, electromagnetic, optical or other sensing member measuring the motion, position or distance of a part of any component of the cylinder volume/piston combination moving axially in the direction of the flow, the signal thereby supplied being indicated and carried as an electrical signal to a suitable processing means, such as an amplifier, and further to a data processing unit such as a microprocessor. This may compute from the data stored in the first part of its memory unit, such as e.g. the characteristic curves of the valve, the variations in volumetric flow, the changes, the flow pressures, or other equivalent control variables. The results of calculation are compared with the desired values stored in the second part of the memory unit, and on the basis of the comparison the control is carried out, utilizing the adjustment of the ratio of the surface areas of the openings of the cylinder volume, known in the art, for producing the desired flow or pressure. This is done by means of a suitable actuator, either by shifting the seat of the control valve, by directing on the spindle or on the main valve disc an extra axial force, or by controlling the surface area of the first opening shifted outside the means by the aid of a projection. It is natural that a means like the one described briefly in the foregoing may, owing to the characteristics mentioned above, also be advantageously used for controlling external systems.

In the apparatus of the invention for controlling the flow of a running fluid, the cover provided with a flow opening is preferably fixed and the spring (if used) is so disposed inside the cylinder volume/piston

# EP 0 108 371 B1

assembly that the direction of its increasing load is opposite to that in the means of the Patent No. 60069. The means may also be controlled from the outside, either with or without a timer, or by another suitable control. The spring may be replaced by gravity, this being accomplished by inclining the means from its axial horizontal position in an expedient direction, or by an electromagnetic force.

In the systems mentioned in the foregoing, the means has been placed in a duct in which prevails vacuum in comparison with the pressure in the cylinder volume. However, the means may equally be placed outside the duct and controlled by its vacuum. In this case, however, the effect of the inversion on the formula to be given below has to be observed. Thus, the main valve disc may be closing either with or against the flow.

The control cone may be replaced with a body of arbitrary shape which gives rise to the changes in the surface area ratios of the openings required by the control function.

The means may also be disposed in an enclosed space, such as a closed duct, and controlled from outside this space because the cover provided with a flow opening is fixed. When provided with a timer, the means restores itself to the desired position, e.g. to the economy position after high-power operation. Thereby, the dwellers are not required to be economy-conscious.

It is to be noted that in the means of the invention for controlling flow, the filtering of the control flow has been arranged to be outside the entire means, whereby e.g. replacement of the filter of the means mounted in the duct is simple. All moving components of the control/measuring circuit of the means are located in a filtered space with reference to the control flow. Therefore, foreign bodies or other impurities cannot enter the cylinder volume to cause trouble in the operation of the valve.

In the following, the invention is described in detail by the aid of the drawings attached, wherein

Fig. 1 presents primarily a valve according to the invention intended for mechanical exhaust air ventilation, wherein the cylinder volume has been connected to the high pressure side by means of a tube or a projection.

Fig. 2 presents an electromagnetic means intended for controlling the volumetric flow range of the volumetric flow of the valve, or alternatively for measuring volumetric flow.

Fig. 3 presents a means intended for controlling the volumetric flow range of the valve, and in which the seat ring is shiftable.

Fig. 4 presents another means intended for controlling the volume flow range of the valve, and in which the seat ring is shifted by the aid of a mechanical lever device.

Fig. 5 presents the control means outside the valve.

Fig. 6 presents the composition of the embodiment example of the invention as shown in Figs. 1 and 5.

Fig. 7 shows the operation of the valve of Figs. 1 and 5 and the forces acting therein, by the aid of a schematic diagram.

Figs. 8—12 show the way in which the control openings $d_1''$ and $d_2''$ are dimensioned in the embodiment example in which the valve has two volumetric flow ranges.

Fig. 13 presents a third means intended for controlling the volumetric flow range of the valve, wherein the shifting of the seat ring is accomplished pneumatically by the aid of a double-acting circuit.

Fig. 14 presents a means as shown in Fig. 13, wherein the pneumatic circuit is single-acting and the second circuit is replaced by a return spring.

Fig. 15 presents a control means provided with a filter, wherein the opening $d_1'$ on the high pressure side is controlled by the aid of a relay and/or a bimetal strip.

Fig. 16 presents a means as in Fig. 15, wherein the opening $d_1'$ is controlled by the aid of a bellows.

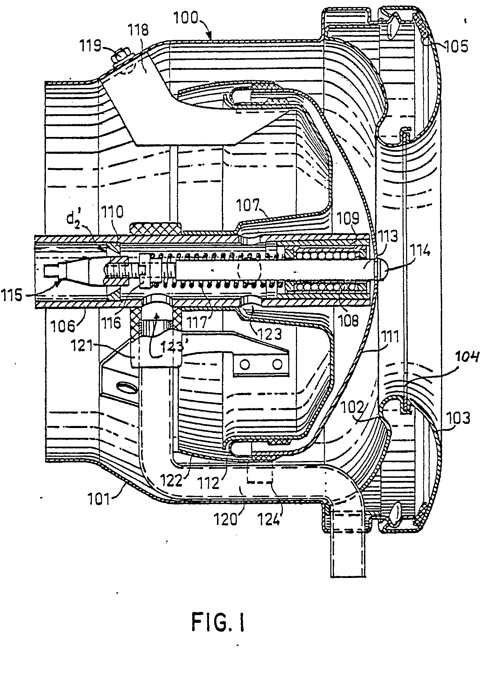

The design of the valve 100 depicted in Fig. 1 is as follows. To the housing 101, positioned on the end of the exhaust air duct terminating on the wall of the room, is attached the bottom part 107 of the valve by the aid of supports 118 and screws 119, to said bottom part in turn being connected with a crimp join the bearing housing 106. On the front end of the bearing housing has been disposed a standard-made linear bearing 108 with endless ball races, said bearing being provided with a conical sleeve 109 for adjustment of play. Supported by the bearing, the spindle 113 moves axially, provided at its front end with a main valve disc 111 and at its rear end with a control cone, or control valve disc, 115. The lubrication bore provided on the front end of the spindle is closed by a plastic plug 114. On the spindle has moreover been disposed a spring 117 between the valve discs 111, 115 so that one end of the spring rests against the linear bearing, and the other against an adjusting nut 116 placed on the spindle or against a fixed stop. The end of the spindle is provided with threads, along which the adjusting nut may be moved. The opening $d_2'$ is disposed in the seat ring 110 at the rear end of the bearing housing.

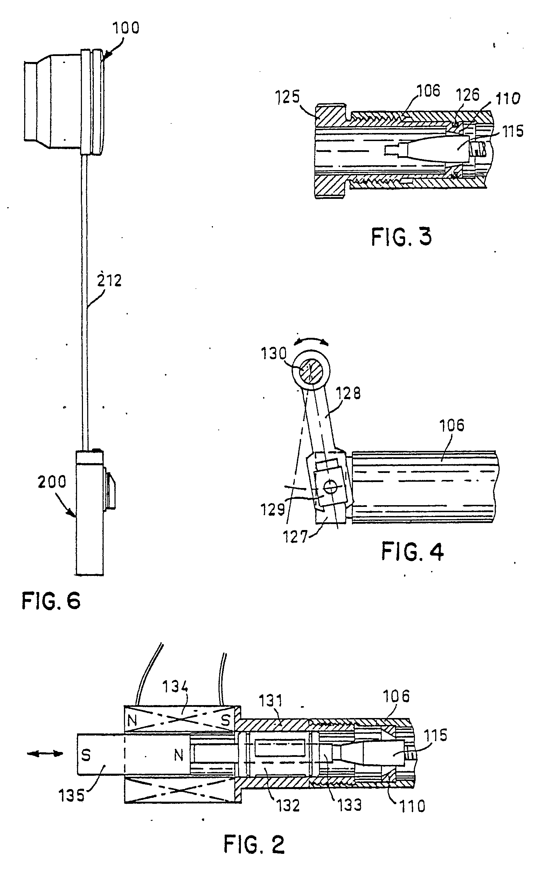

The spring mounted on the spindle 113 may in some cases be left out altogether. The valve 100 may be mounted in a position deviating from the axial horizontal plane (e.g. instead of wall mounting for ceiling mounting), and by gravity action acting on the piston combination 111, 113, 115 is replaced the spring force caused by the spring 117. Hereby, the spindle 113 may be threaded over its entire central portion, whereby by the aid of the adjusting nut 116 the smallest opening of the valve can be defined and in this manner the valve prevented from closing completely. On the other hand, the spring may in the conventional horizontal position of the valve 100 be replaced by electromagnetic arrangements, e.g. as shown in Fig. 2.

The bottom 107 of the valve and the main valve disc 111 are hermetically and elastically interconnected by a membrane 112, and the juncture is protected by an envelope 122, which also serves as a flow baffle.

The seat ring of the valve consists of the valve cover, consisting of two components: an inner shell 102

3

and an outer shell 103, these two being provided with a packing 104. The outer shell is affixed to the housing of the valve with a short thread at its front end, and the juncture is sealed with the packing 105. To the envelope 122 has been attached a guide 124, which prevents the cylinder from rotating when it is cleaned, while permitting axial motion.

The bearing housing 106 is provided with a tube or projection 120. They have been interconnected by a connector 121. Behind the bearing 108, the housing has also been provided with bores 123 which enable the control air to flow past the bearing. Both the opening 123' and the projection 120 and the bores 123 in combination must have a cross section area which is larger by one order of magnitude than the opening $d_2'$, in order to prevent the cascade effect in the instance in question.

Fig. 2 represents either a control or a measuring means, depending on in what type of circuit the solenoid 134 has been incorporated and on the magnetic properties of the body 135 moving inside the solenoid and/or in its immediate vicinity.

In extension of the bearing housing 106, a non-magnetic sleeve 131 has been affixed by means of threads, in which possibly a support bearing 132 has been mounted. In like manner, in extension of the control valve disc 115 has been affixed an extension spindle 133 made of a non-magnetic material, and which is supported by the bearing mentioned and has been provided with a soft iron body 135. On the rear end of the support bearing sleeve 131, a solenoid 134 has been mounted. It has been connected to an adjustable power supply. As current is conducted into the solenoid, it is magnetized and acts on the spindle by directing on it by mediation of the soft iron body an axial force of a given magnitude, proportional to the current intensity. Thus, it is possible to control or change the volumetric flow control range of the valve by increasing or decreasing the loading of the spring 117 by the aid of the electromagnet constituted by the solenoid.

The spring 117 may also be completely omitted from the valve and the spring load may be replaced by an electromagnetic force generated by the solenoid 134, proportional to the current intensity. By means of an axial force such as this, the dynamic or other forces now acting on the main valve disc 111 would be compensated.

The solenoid 134, disposed in the manner shown in Fig. 2, or on the other end of the spindle in front of the valve, may be used for measuring the flow pressure or differential pressure and the volumetric flow by replacing the soft iron body with a ferrite body 135 or with a body having equivalent magnetic properties, and by connecting the solenoid to a suitable oscillator circuit. The ferrite body 135 acts in a manner known in the art, depending on the distance of the solenoid, so that the frequency of the oscillator circuit changes, and based thereon the relative position of the spindle can be determined. It is then possible by the aid of a frequency/voltage converter, an analog/digital converter, a suitable calculating circuit or a microprocessor to obtain a numerical display of the duct pressure, volumetric flow, number or measurements and accumulated volumetric flow. The measured values that have been obtained and the valve's characteristic curves which may have been stored in the memory unit, the flow values and pressures may be compared in data processing units and applied towards automatic control of the valve and of a valve group, e.g. for automatic control of the ventilation of a whole building or building complex.

In the general case there may be installed in conjunction with the housing 101 (Fig. 1) of the valve, or between the housing and the moving piston assembly, a sensing element, or a short-distance measuring means, which may be mechanical, optical and/or electrical and which detects the change of relative distance or of position of an axially movable component with reference to the stationary housing or to a part thereof. Based on the signal from the sensing element, for instance the volumetric flow can be determined in the manner presented in the foregoing.

In the control procedure shown in Fig. 3, the seat ring 110 has been replaced with a seat sleeve 125 provided with a packing 126, which in turn moves axially in threads produced by turning in the rear end of the bearing housing 106. The seat sleeve can be turned directly or by means of an intermediate member such as an angle transmission or a flexible shaft, manually or by machine means, whereby the range of operation of the valve is correspondingly altered.

In Fig. 4, the component 125 of Fig. 3 has been replaced by a component 127 which with its seals is in other respects similar but has no thread, and which is on its rear end provided with pins for sliding bodies 129. Thereby, the seat sleeve 127 can be moved from outside the duct by the aid of a fork 128 and a shaft 130, whereby the range of operation of the valve is correspondingly altered.

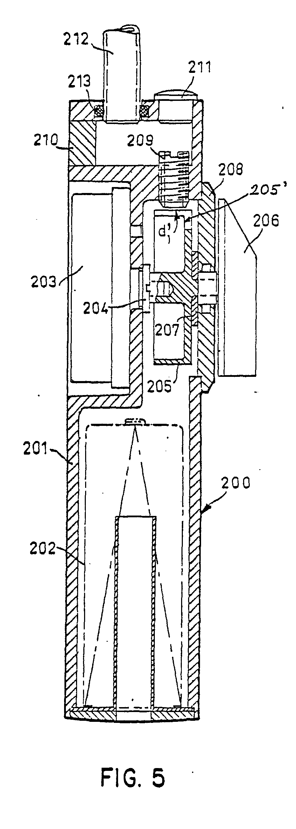

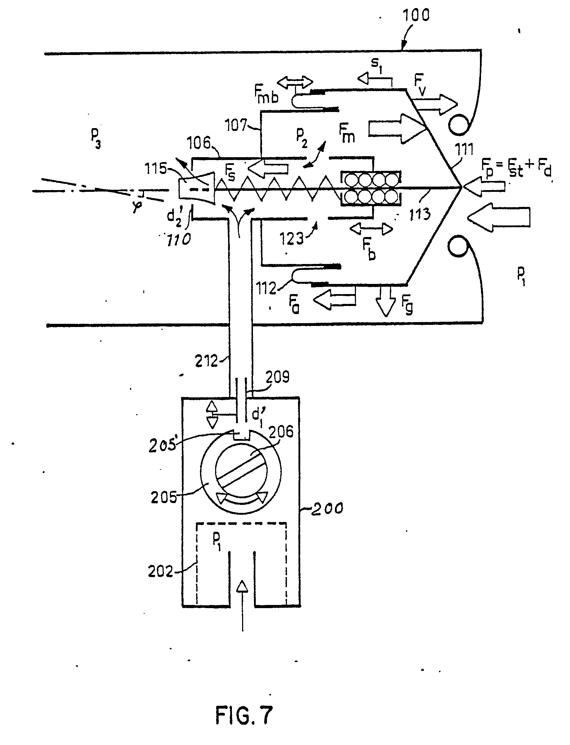

In the control means 200 shown in Fig. 5, the opening $d_1'$ has been placed outside the valve (Fig. 6). The means 200 is provided with an opening positioned on the lower end of the housing 201, and with a control air filter 202. In this case, the opening has to be likewise larger by one order of magnitude than the opening $d_1'$, for preventing the cascade effect.

In the upper part of the control means 200, a timer 203 is attached by the aid of a nut 204, which timer may be mechanical, electrical or pneumatic. The timer depicted in Fig. 5 is a mechanical clock means known in itself in the art. On its axis has been mounted, to act as stop, a disc-shaped sheave 205 with sliding washer 207. The cover 208 closes the space and the turning handle 206 remains on the outside thereof. On the periphery of the sheave has been arranged a notch 205', or part of the periphery has been taken out. The sheave is turnable by the aid of a mechanical spring means, released by the timer 203 in front of the nozzle 209 from a first to a second position, whereby the notch 205' in the sheave moves out from in front of the nozzle.

4

By the aid of the timing sheave, together with the threaded nozzle an equivalent flow opening $d_1'$ of desired size is obtained by adjusting the distance between the nozzle and the sheave. Through the opening closed by the plug 211 it is also possible to change the position of the nozzle itself with reference to the timing sheave. The control means is connected to the valve 100 by a tube 212, connecting with the top part of the housing of the control means 200 by the packing 213. The plug 210 closes the nozzle space in the rear part of the housing. Fig. 6 presents the valve 100 with control means 200.

Fig. 7 illustrates the operation of the valve 100. The control air, its quantity being about 1% of the entire volumetric flow, is conducted through the lower part aperture of the control means 200 and the filter 202, the notch 205' of the timing sheave, through the nozzle 209 and the tubular projection 212 into the bearing housing 106, where part of the control air departs through the opening $d_2'$, part of said air going into the hermetically sealed cylindrical space defined by the bottom 107, the main valve disc 111 and the membrane 112 through the openings 123, and out therefrom.

As has been presented in the Finnish Patent print No. 60069, the pressure $p_2$ in the cylindrical volume varies with reference to the pressure $p_1$ in the room space and to the duct pressure so that the relationship

$$\frac{p_2 - p_3}{p_1 - p_3} = n = \frac{1}{(d_2'/d_1')\ 4 + 1}$$

applies at moderate pressures. Thereby, when e.g. $d_1' = d_2'$ and $p_1 = 10$ N/cm$^2$ gauge, there is $p_2 = 5$ N/cm$^2$ gauge.

Accordingly, when for instance the pressure $p_1$ goes down, the main valve disc moves the distance $s_1$ to the left, at the same time reducing the opening $d_2'$ until equilibrium has been established between the forces acting on the main valve disc 111, that is,

$$F_m + F_v = F_a + F_b + F_{mb} + F_s + F_p \pm \sin\ \varphi\ (F_g),$$

wherein

$F_m$ = piston force
$F_v$ = force generated by the annular vacuum field
$F_a$ = resistance caused by main flow (shape and friction resistance)
$F_b$ = bearing resistance
$F_{mb}$ = membrane resistance
$F_s$ = spring load
$F_p = F_{st} + F_d$, in which
$F_{st}$ = static pressure at the aperture
$F_d$ = dynamic pressure at the aperture
$F_g$ = weight of the moving system
$\varphi$ = inclination of the valve

When the cone 115 of the control valve disc and the diameter of the nozzle 209 aperture and its distance from the timing wheel are suitably dimensioned, the pressure $p_2$ and by its aid the motion of the main valve disc 111 can be so governed and controlled that to a given differential pressure $p_1 - p_3$ corresponds the desired volumetric flow, and in this instance so that it is constant, independent of fluctuations of the differential pressure.

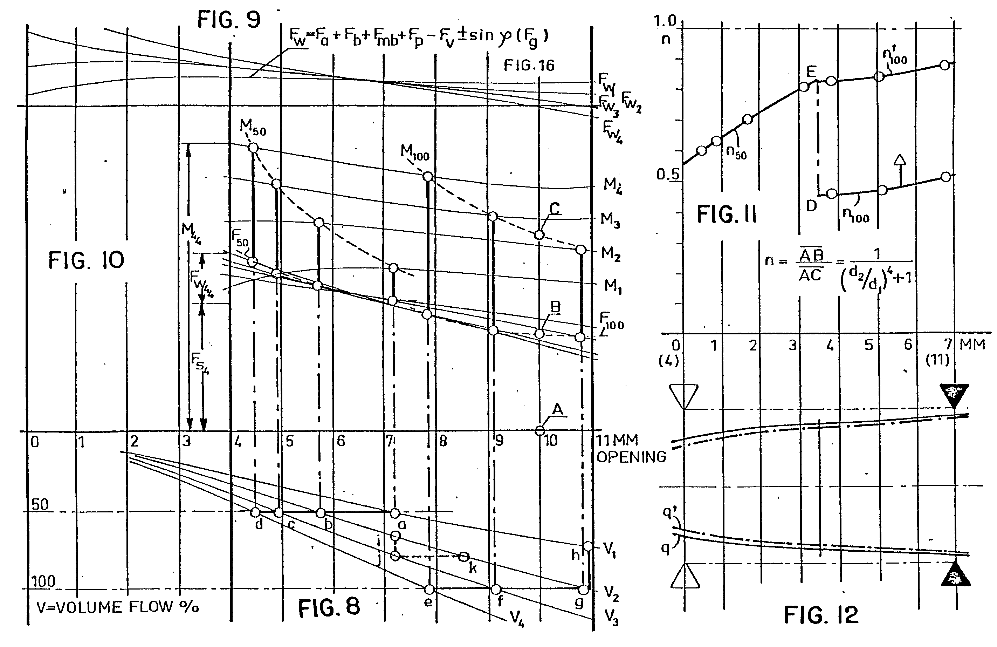

Figs. 8—12 show how the dimensioning is done in this instance in which the valve serves as constant flow valve in two volumetric flow ranges, that is, in the 50% and 100% ranges.

In Fig. 8 are shown the volumetric flow curves $V_1 - V_4$ corresponding to four differential pressures as a function of the valve opening 0—11 mm. When calibrating in the 50% volumetric flow range 50%, one moves e.g. with pressure increasing from the value 1 to the value 4 in the horizontal plane from one curve to another along the path a-b-c-d, and similarly in the 100% range with decreasing pressure, along the path e-f-g. On the interval g-h the valve is fully open and the volumetric flow goes down.

When it is desired to maintain constant pressure $p_1$ instead of constant volumetric flow, that is, it is desired that the valve acts as a constant pressure valve, the direction of operation of the valve is inverted from what has been described. Hereby, for instance when the pressure rises from the value 2 equivalent to the volumetric flow curve $V_2$ in Fig. 8 to the value 3, this implies that one moves back to the same curve along the path i-j-k, whereby the valve is opened up in a suitable amount.

In the coordinate system of Fig. 9 are plotted the curves of the resistance forces $F_w$ corresponding to the volumetric flows, representing the sums of all forces plotted over the valve opening, excluding the piston force and the spring force. When the valve is fully closed, $F_w = F_{st}$.

In Fig. 10 are plotted, as absolute values, the piston force curves M corresponding to different pressures and the sum curves $F_s + F_w$ on the same scale. Through the points a, b, c and d are drawn vertical lines to intersection with the curves mentioned, and the points thus obtained are connected by the curves $F_{50}$ and $M_{50}$ drawn with dotted lines; the same process is repeated for the points e, f and g: curves $F_{100}$ and $M_{100}$. Now, for instance with valve opening 10 mm, the ratio AB/AC signifies the ratio of the required piston force to the piston force available, that is the ratio n, with the opening 10 mm.

When the n values corresponding to the different points a-g are transported into the coordinate system of Fig. 11 and are connected by curves $n_{50}$ and $n_{100}$, it is observed that the former ends at the point E and the latter starts at the point D. Therefore, in order to achieve continuity of the surface of the control valve cone 115, like the surface q of the cone in Fig. 12, the opening $d_1'$ is reduced so that the formula of n given in Fig. 11 is satisfied with the value of n corresponding to the point E. Hereby, the curve $n_{100}$ moves upward to become the curve $n_{100}'$.

As will be understood from the foregoing, the diameter of the control valve cone equivalent to the required opening $d_2'$ is found for each position, that is for each valve opening between 4 and 11 mm, by calculation from the formula of n, and they can be plotted to form the surface q, Fig. 12. For geometrical and flow technical reasons, however, the surface has to be corrected to become the surface q', which is easier to define experimentally with the aid of a straight conical surface.

In the case described in the foregoing, the cylinder space carries over-pressure with reference to the ambience. It follows from the universal nature of the formula that the means may also be controlled by vacuum with reference to the ambience. It is then necessary to use instead of the quotient $d_2'/d_1'$ in the formula its inverse value $d_1'/d_2'$ if the notation of the apertures with reference to the flow direction is kept unchanged.

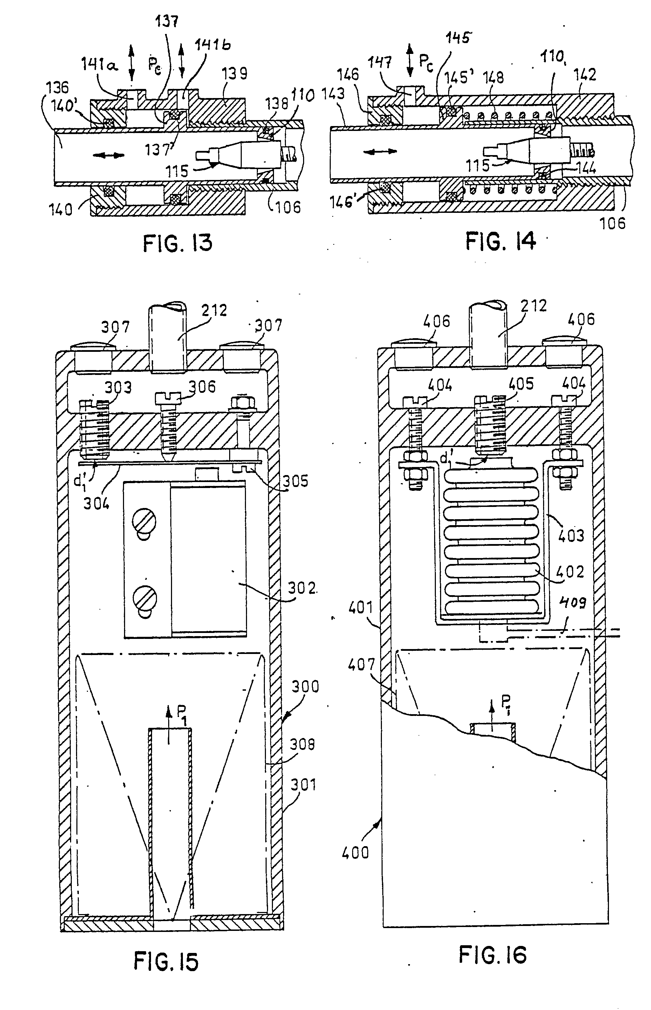

The valve based on cascade control can be governed and controlled in many different ways in addition to those described in connection with Figs. 2—5. Adjustment of the spring 117 of the control valve disc 115 is not considered to be an actual control procedure, but rather a basic adjustment or calibration of the valve. Alternative control means designs are presented in Figs. 13—16. In Fig. 13, the bearing housing 106 of the valve of the invention is provided with an auxiliary cylinder 139, inside of which moves a seat sleeve 136 made to serve as piston and provided with a packing 137'. The sleeve is sealed with the packing 138 against the auxiliary cylinder 139. The cylinder is at the rear end closed with a cover 140 provided with packing 140'. On the outer surface of the seat sleeve 136 is provided a flange ring 137 preferably provided with a packing 137', said flange ring resting against the inner surface of the auxiliary cylinder 139, and in the inner space of said auxiliary cylinder, preferably on its opposite ends in the motion direction of the spindle 115, having been provided connectors 141a, 141b for a pneumatic or hydraulic circuit. From this circuit pneumatic or hydraulic pressure $p_c$ may be conducted to either side of the flange ring. In this manner, the position of the seat sleeve, and correspondingly the operating range of the valve, can be changed as desired.

In Fig. 14, the bearing housing 106 of the valve has in its turn been provided with an auxiliary cylinder, i.e., with a combined spring/pressure cylinder 142 within which moves a seat sleeve 143 formed to be a piston, with its packings 144 and 145'. The rear end of the cylinder has been closed with a cover 146 provided with packing 146'. On the first end of the inner space of the auxiliary cylinder 142 has been arranged a connector 147 for a pneumatic or hydraulic circuit, and at the other end of the inner space, between the flange ring 145 of the seat sleeve 143 and the end of the auxiliary cylinder, has been disposed at least one spring 148. The seat sleeve can be shifted against the force of the spring 148 by the aid of the pressure $p_c$, using single-circuit pneumatic or hydraulic control instead of the dual circuit control of Fig. 13, and the operating range of the valve can be correspondingly changed in the manner desired. By replacing the spring 148 with a bimetal spring, the temperature may also be taken into account in the control.

The means 300 shown in Fig. 15 is intended to control the valve from the outside by means of a tube 212, e.g. electrically by the aid of a relay. In the lower part of the housing 301 has been placed a control air filter 308 and in the upper part, the $d_1'$ nozzle 303 provided with threads, whereunder has been mounted a stop 304 to adjust the opening $d_1'$. The stop is a metal strip 304, attached by a screw 305, at a distance from the nozzle 303, to the housing 301 of the control means. Between the fixing point of the strip and its free end has been disposed an adjustment screw 306. The smallest gap between the nozzle and the strip can be fixed with the adjustment screw 306. The upper part of the housing is provided with plugs 307 for fixing and adjustment. Under the strip is placed an electrically controllable relay 302, which when energized enlarges the opening $d_1'$ to a pre-determined value which is dependent on the gap between the relay and the strip.

The strip 304 may also have another shape and be made of bimetal sheet, whereby it is possible with its aid to account for the temperature of the fluid in the valve control. If needed, the strip may be provided with a ferromagnetic body opposite to the relay. The means 300 may also be used without relay to control the valve merely on the basis of temperature.

The means 400 shown in Fig. 16 is in other respects like the means 300 of Fig. 15, except that the opening $d_1'$ of the $d_1'$ nozzle 405 provided with threads is controlled by a bellows 402, mounted on the housing 401 by the aid of a yoke 403 and screws 404. The bellows may be enclosed, whereby it reacts only to the temperature of the control air, or it may be open, in which case it is connected to the external pneumatic or hydraulic control circuit by a connector 409. The length of the bellows, and at the same time the area of the opening $d_1'$ of the nozzle 405, is controllable by pressure. The pressure pulse supplied by the control circuit may be based on temperature or another variable. The lower part of the housing is provided with a control air filter 407 and the upper part, with plugs 406 for mounting the screws 404. The tube 212 connects the control means to the valve 100 as above.

**Claims**

1. A means for controlling and/or measuring the flow of a running fluid, wherein the throttling of the flow is controlled by utilizing the fluid's own differential pressure arising from the flow, said means comprising a cover (102, 103) provided with a flow aperture and a main valve disc (111), the position of which with relation to each other is adjustable by an adjustment means consisting of a cylindrical volume, which is connected by a first opening $(d_1')$ to the high pressure side $(p_1)$ and by a second opening $(d_2')$ to the low pressure side $(p_3)$, said volume being confined by a bottom part (107) which is fixed with reference to the body (101) of the means, by the main valve disc (111) attached thereto by an elastic member (112), and by a fixedly attached cylindrical bearing housing (106) having at its rear end a seat (110), and of a spindle (113) which is supported in a linear bearing (108) or equivalent bearing arrangement disposed at· the front end of the bearing housing (106) to be movable in the direction of the flow, at the front end of said spindle being attached the main valve disc (111) and at the rear end a control valve disc (115) or an equivalent member which is in connection with the seat (110) and which together with the seat forms said second opening $(d_2')$ and a spring force or equivalent force acting on said spindle for compensating the dynamic and other forces acting on said main valve disc, by the aid of which adjustment means the ratio of the surface areas of said openings $(d_1, d_2')$ and at the same time the pressure $(p_2)$ in the volume can be regulated, characterized in that the bearing housing (106) affixed to the bottom part (107) of said adjustment means is provided with an aperture (123, 123') and with a projection (120, 212) therewith connected, by the aid of which the first opening $(d_1')$ of the cylindrical volume has been offset to be outside the means, and that the means further comprises:
— at least one sensing element, by the aid of which is measured the position of a part of the adjustment means moving axially in the flow direction,
— a data processing unit, to which the signal supplied by the sensing element, suitable processed, is fed,
— a memory unit, in a first part of which data concerning the characteristic curve of the valve or equivalent are stored, from which based on the signal from the sensing element mentioned the variations of volumetric flow and/or pressure can be calculated with the aid of the data processing unit, and in the other part of which the desired values of volumetric flow and/or pressure are stored, with which the above-mentioned calculated values are compared in the data processing unit,
— at least one actuator, by the aid of which, on the basis of the comparison, the surface area ratio of the openings $(d_1', d_2')$ can be regulated with a view to realizing the desired volumetric flow and/or pressure.

2. A means according to claim 1, characterized in that on the spindle (113) between the valve discs (111, 115), such as between the bearing housing (106) or an equivalent component (108) fixed with reference to the body (101) and a stop on the spindle, such as a stop (116) which is adjustable in the direction of the spindle, is placed at least one spring (117).

3. A means according to claim 1 or 2, characterized in that the actuator comprises in extension of the spindle (113) a soft iron body (135) or equivalent, and fixedly attached to the rear end of the bearing housing (106) a solenoid (134) or another equivalent member, inside which and/or in the immediate vicinity of which the soft iron body has been arranged to move, and that the solenoid has been connected to a controllable power supply, whereby when current is supplied to the solenoid it is magnetized and acts on the spindle, directing on it by mediation of the soft iron body an axial force of a given magnitude and proportional to the current intensity.

4. A means according to claim 1 or 2, characterized in that the sensing member consists of a solenoid (134) or equivalent member fixedly attached to the bearing housing (106), said solenoid being part of an oscillator circuit, and of a ferrite body (135) or another body with equivalent magnetic properties connected to the spindle (113), and which acts on the basis of its position, in a manner known in itself in the art, on the solenoid so that the frequency of the oscillator circuit changes and the position of the spindle is determinable on this basis.

5. A means according to any one of the preceding claims, characterized in that the seat (110) associated with the control valve disc (115) has been placed in a seat sleeve (125) so disposed in the bearing housing (106) that the position of the seat with reference to the bearing housing (106) and to the movable spindle (115) can be adjusted.

6. A means according to claim 5, characterized in that in extension of the bearing housing (106) there is an auxiliary cylinder 139, 142 within which a seat sleeve (136, 143) has partly been disposed to move in the direction of the spindle (113) by mediation of a suitable actuator.

7. A means according to claim 6, characterized in that on the outer surface of the seat sleeve (136) there is a flange ring (137), preferably provided with a packing (137'), resting against the auxiliary cylinder's (139) inner surface, and in the inner volume of said auxiliary cylinder at the opposite ends thereof in the direction of motion of the spindle (113), having been provided connectors (141a, 141b) for a pneumatic or hydraulic circuit from which a pneumatic or hydraulic pressure can be conducted to either side of the flange ring.

8. A means according to claim 6, characterized in that at a first end of the inside volume of the auxiliary cylinder (142) has been arranged a connector (147) for a pneumatic or hydraulic circuit and at the other end of the inside volume, between the flange ring (145) of the seat sleeve (143) and the end of the auxiliary cylinder, has been mounted at least one spring (148).

9. A means according to claim 8, characterized in that the spring (148) is a bimetal spring.

10. A means according to any of the preceding claims, characterized in that to the projection (120, 212) of the bearing housing (106) has been attached a control means (200, 300, 400), consisting of a nozzle (209, 303, 405) of which the opening corresponds to the first opening $(d_1')$ of the cylindrical volume and of a stop (205, 304, 402) before this opening, limiting the surface area of the aperture.

11. A means according to claim 10, characterized in that the control means (200) comprises a timer (203), under control of which, with the aid of a suitable actuator such as a relay, the stop (205) is settable at least at two distances from the opening of the nozzle (209).

12. A means according to claim 11, characterized in that the stop is a disc-shaped sheave (205) on the periphery of which a notch (205') has been provided or part of the periphery has been removed, and said sheave being turnable by the aid of a mechanical spring means released by the timer (203), in front of the nozzle (209) from a first to a second position, whereby the notch (205') in the periphery moves away from in front of the nozzle.

13. A means according to claim 10, characterized in that the stop is a metal strip (304), preferably a bimetal strip which has been attached, spaced from the nozzle (303), to the housing (301) of the control means, and between the fixing point and the free end of said strip having been placed an adjusting screw (306) by the aid of which the distance of the free end of the strip (304) from the opening $(d_1')$ of the nozzle (303) is adjustable.

14. A means according to claim 10, characterized in that the stop is a closed bellows (402) affixed to the body (401) of the control means.

15. A means according to claim 14, characterized in that the bellows (402) are through a connector (409) connectable into a pneumatic or hydraulic circuit so that its length and at the same time the surface area of the opening $(d_1')$ of the nozzle (405) can be adjusted by the aid of pressure.

## Patentansprüche

1. Einrichtung zum Steuern und/oder Messen der Strömung eines laufenden Fluids, bei der das Drosseln der Strömung dadurch gesteuert wird, daß der sich aus der Strömung ergebende eigene Differenzdruck des Fluids genutzt wird und die Einrichtung eine Abdeckung (102, 103) aufweist, die mit einer Strömungsöffnung und einem Hauptventilteller (111) versehen ist, deren Stellung zueinander mittels einer Einstelleinrichtung einstellbar ist, die aus einem zylindrischen Volumen besteht, welches durch eine erste Öffnung $(d_1')$ mit der Hochdruckseite $(p_1)$ und durch eine zweite Öffnung $(d_2')$ mit der Niederdruckseite $(p_3)$ verbunden ist, wobei das Volumen eingegrenzt ist von einem Boden (107), der gegenüber dem Körper (101) der Einrichtung fest ist, von dem Hauptventilteller (111), der daran mittels eines elastischen Gliedes (112) angebracht ist, und von einem fest angebrachten zylindrischen Lagergehäuse (106), welches an seinem hinteren Ende einen Sitz (110) hat, sowie aus einer Spindel (113), die in einem linearen Lager (108) oder einer gleichwertigen Lageranordnung abgestützt ist, die am vorderen Ende des Lagergehäuses (106) in Richtung der Strömung bewegbar angeordnet ist, wobei am vorderen Ende der Spindel der Hauptventilteller (111) und am hinteren Ende ein Steuerventilteller (115) oder ein gleichwertiges Glied angebracht ist, welches mit dem Sitz (110) in Verbindung steht und zusammen mit dem Sitz die zweite Öffnung $(d_2')$ bildet und eine Federkraft oder gleichwertige Kraft auf die Spindel wirkt, um die auf den Hauptventilteller einwirkenden dynamischen und anderen Kräfte auszugleichen, wobei mit Hilfe dieser Einstelleinrichtung das Verhältnis der Oberflächenbereiche der Öffnungen $(d_1, d_2')$ und gleichzeitig der Druck $(p_2)$ in dem Volumen reguliert werden kann, dadurch gekennzeichnet, daß das am Boden (107) der Einstelleinrichtung befestigte Lagergehäuse (106) mit einer Öffnung (123, 123') und mit einem damit verbundenen Ansatz (120, 212) versehen ist, mit deren Hilfe die erste Öffnung $(d_1')$ des zylindrischen Volumens so versetzt worden ist, daß sie sich außerhalb der Einrichtung befindet, und daß die Einrichtung ferner folgendes aufweist:

— mindestens ein Fühlerelement, mit dessen Hilfe die Position eines Teils der Einstelleinrichtung gemessen wird, welches sich axial in Strömungsrichtung bewegt,

— eine Datenverarbeitungseinheit, der das vom Fühlerelement gelieferte Signal, geeignet verarbeitet, zugeführt wird,

— eine Speichereinheit, in deren einem ersten Teil die Kennlinie des Ventils oder Gleichwertiges betreffende Daten gespeichert sind, aus denen auf der Basis des genannten Signals vom Fühlerelement die Schwankungen volumetrischer Strömung und/oder Drucks mit Hilfe der Datenverarbeitungseinheit bereichnet werden können, und in deren anderem Teil die Sollwerte volumetrischer Strömung und/oder Drucks gespeichert sind, mit denen die zuvorgenannten Rechenwerte in der Datenverarbeitungseinheit verglichen werden,

— mindestens eine Betätigungsvorrichtung, mit deren Hilfe auf der Basis des Vergleichs das Oberflächenbereichsverhältnis der Öffnungen $(d_1', d_2')$ im Hinblick auf die Verwirklichung der gewünschten volumetrischen Strömung und/oder des Drucks reguliert werden kann.

2. Einrichtung nach Anspruch 1, dadurch gekennzeichnet, daß auf die Spindel (113) zwischen die Ventilteller (111, 115), zum Beispiel zwischen das Lagergehäuse (106) oder ein gleichwertiges Bauteil (108), welches gegenüber dem Körper (101) fest ist, und einem Anschlag auf der Spindel, zum Beispiel einem Anschlag (116), der in Richtung der Spindel einstellbar ist, mindestens eine Feder (117) aufgesetzt ist.

3. Einrichtung nach Anspruch 1 oder 2, dadurch gekennzeichnet, daß die Betätigungsvorrichtung in Verlängerung der Spindel (113) einen Weicheisenkörper (135) oder gleichwertiges und ein am hinteren Ende des Lagergehäuses (106) fest angebrachtes Solenoid (134) oder ein anderes gleichwertiges Glied aufweist, innerhalb dessen und/oder in unmittelbarer Nähe dessen der Weicheisenkörper beweglich angebracht worden ist, und daß das Solenoid mit einem steuerbaren Netzteil verbunden worden ist, wodurch, wenn dem Solenoid Strom zugeführt wird, dieses magnetisiert wird und auf die Spindel einwirkt, auf die sie durch Vermittlung des Weicheisenkörpers eine Axialkraft von gegebener Größe und proportional zur Stromstärke richtet.

4. Einrichtung nach Anspruch 1 oder 2, dadurch gekennzeichnet, daß das Fühlerelement aus einem Solenoid (134) oder gleichwertigem Glied, welches am Lagergehäuse (106) fest angebracht ist, wobei das Solenoid Teil einer Oszillatorschaltung ist, und aus einem Ferritkörper (135) oder einem anderen Körper mit gleichwertigen magnetischen Eigenschaften besteht, der mit der Spindel (113) verbunden ist und auf Grund seiner Lage in an sich bekannter Weise auf das Solenoid so einwirkt, daß die Frequenz der Oszillatorschaltung sich ändert und die Position der Spindel auf dieser Basis bestimmbar ist.

5. Einrichtung nach einem der vorhergehenden Ansprüche, dadurch gekennzeichnet, daß der dem Steuerventilteller (115) zugeordnete Sitz (110) in eine Sitzmanschette (135) eingesetzt worden ist, die im Lagergehäuse (106) so angeordnet ist, daß die Lage des Sitzes in bezug auf das Lagergehäuse (106) und die bewegliche Spindel (115) eingestellt werden kann.

6. Einrichtung nach Anspruch 5, dadurch gekennzeichnet, daß in Verlängerung des Lagergehäuses (106) sich ein Hilfszylinder (139, 142) befindet, innerhalb dessen eine Sitzmanschette (136, 143) teilweise so angeordnet worden ist, daß sie sich durch Vermittlung einer geeigneten Betätigungsvorrichtung in Richtung der Spindel (113) bewegt.

7. Einrichtung nach Anspruch 6, dadurch gekennzeichnet, daß an der Außenfläche der Sitzmanschette (136) sich ein Flanschring (137) befindet, der vorzugsweise mit einer Dichtung (137') versehen ist, die an der Innenfläche des Hilfszylinders (139) ruht, und im Innenvolumen des Hilfszylinders an dessen entgegengesetzten Enden in Bewegungsrichtung der Spindel (113) Anschlußstücke (141a, 141b) für einen pneumatischen oder hydraulischen Kreis vorgesehen worden sind, von denen ein pneumatischer oder hydraulischer Druck der einen oder anderen Seite des Flanschringes zugeleitet werden kann.

8. Einrichtung nach Anspruch 6, dadurch gekennzeichnet, daß an einem ersten Ende des Innenvolumens des Hilfszylinders (142) ein Anschlußstück (147) für einen pneumatischen oder hydraulischen Kreis angeordnet worden ist, und am anderen Ende des Innenvolumens zwischen dem Flanschring (145) der Sitzmanschette (143) und dem Ende des Hilfszylinders mindestens eine Feder (148) angebracht worden ist.

9. Einrichtung nach Anspruch 8, dadurch gekennzeichnet, daß die Feder (148) eine Bimetallfeder ist.

10. Einrichtung nach einem der vorhergehenden Ansprüche, dadurch gekennzeichnet, daß am Ansatz (120, 212) des Lagergehäuses (106) eine Steuereinrichtung (200, 300, 400) befestigt worden ist, die aus einer Düse (209, 303, 405), deren Öffnung der ersten Öffnung ($d_1'$) des zylindrischen Volumens entspricht, und aus einem Anschlag (205, 304, 402) vor dieser Öffnung besteht, der den Oberflächenbereich der Öffnung begrenzt.

11. Einrichtung nach Anspruch 10, dadurch gekennzeichnet, daß die Steuereinrichtung (200) einen Zeitgeber (203) aufweist, unter dessen Steuerung mit Hilfe einer geeigneten Betätigungsvorrichtung, beispielsweise eines Relais der Anschlag (205) mindestens auf zwei Entfernungen von der Öffnung der Düse (209) setzbar ist.

12. Einrichtung nach Anspruch 11, dadurch gekennzeichnet, daß der Anschlag eine scheibenförmige Leitrolle (205) ist, an deren Umfang eine Kerbe vorgesehen oder ein Teil des Umfangs entfernt worden ist, und wobei die Leitrolle mit Hilfe einer vom Zeitgeber (203) ausgelösten mechanischen Federeinrichtung vor der Düse (209) aus einer ersten in eine zweite Stellung drehbar ist, wodurch die Kerbe (205') im Umfang sich von vor der Düse wegbewegt.

13. Einrichtung nach Anspruch 10, dadurch gekennzeichnet, daß der Anschlag ein Metallstreifen (304) ist, vorzugsweise ein Bimetallstreifen, der mit Abstand von der Düse (303) am Gehäuse (301) der Steuereinrichtung angebracht worden ist, und wobei zwischen dem Befestigungspunkt und dem freien Ende des Streifens eine Stellschraube (306) gesetzt worden ist, mit deren Hilfe der Abstand des freien Endes des Streifens (304) von der Öffnung ($d_1'$) der Düse (303) einstellbar ist.

14. Einrichtung nach Anspruch 10, dadurch gekennzeichnet, daß der Anschlag ein geschlossener Balg (402) ist, welcher am Körper (401) der Steuereinrichtung befestigt ist.

15. Einrichtung nach Anspruch 14, dadurch gekennzeichnet, daß der Balg (402) durch ein Anschlußstück (409) in einen pneumatischen oder hydraulischen Kreis einschaltbar ist, so daß seine Länge und gleichzeitig der Oberflächenbereich der Öffnung ($d_1'$) der Düse (405) mit Hilfe von Druck eingestellt werden kann.

**Revendications**

1. Moyen pour contrôler et/ou mesurer l'écoulement d'un fluide courant dans lequel l'étranglement du flux est contrôlé par l'utilisation de la pression différentielle propre du fluide, provenant de l'écoulement, ledit moyen comprenant un couvercle (102, 103) muni d'un orifice d'écoulement et d'un disque de vanne principal (111), dont les positions réciproques sont adjustables par un moyen de réglage consistant en un volume cylindrique, qui est relié à travers un premier orifice ($d_1'$) au côté haute pression ($p_1$) et à travers un second orifice ($d_2'$) au côté basse pression ($p_3$), ledit volume étant fermé par une partie de fond (107) qui est fixée par rapport au corps (101) du moyen, par le disque de vanne principal (111) qui y est attaché par un élément élastique (112), et par un boitier de support (106) fixe ayant à son extrémité supérieure un siège (110), et d'une tige (113) qui est disposée dans un support linéaire (108) ou un autre dispositif de support équivalent, disposé à l'extrémité avant du boitier de support (106) pour être mobile dans le sens de l'écoulement, l'extrémité avant de ladite tige portant le disque de vanne principal (111) et son extrémité arrière, un disque de vanne de contrôle (115) ou un élément équivalent qui est en liaison avec le siège (110) et qui, en commun avec le siège, forme ledit second orifice ($d_2'$) et une force de ressort ou une force équivalente agissant sur ladite tige pour compenser les forces dynamiques ou autres agissant sur le disque de vanne principal, ledit moyen de réglage permettant d'ajuster le rapport des superficies desdits orifices ($d_1'$, $d_2'$) et en méme temps la pression à l'intérieur du volume, caractérisé en ce que le boitier de support (106) fixé à la partie de fond (107) dudit moyen de réglage est muni d'une ouverture (123, 123') et d'une saillie (120, 212) reliée à celui-ci, à l'aide duquel le premier orifice ($d_1'$) du volume cylindrique a été décalé pour être à l'extérieur du moyen, et que le moyen comprend en outre:

— au moins un moyen un élément détecteur à l'aide duquel est mesuré la position d'une partie du moyen de réglage mobile axialement dans le sens de l'écoulement,

— une unité de traitement de données qui reçoit le signal émis par l'élément détecteur, traité de manière appropriée,

— une unité de mémoire, dans une première partie de laquelle les données concernant la courbe caractéristique de la vanne ou équivalent sont stockées, qui permet de calculer, en se basant sur le signal de l'élément détecteur mentionné, les variations de l'écoulement volumétriqueet/ou de la pression, à l'aide de l'unité de traitement de données, et dans l'autre partie de laquelle sont stockées les valeurs souhaitées dé l'écoulement volumétrique et/ou de la pression, avec lesquelles les valeurs calculées mentionnées ci-dessus sont comparées dans l'unité de traitement de données,

— au moins un dispositif de commande à l'aide duquel, en se basant sur la comparaison, le rapport des superficies des orifices ($d_1'$, $d_2'$) peut être ajusté, afin d'obtenir l'écoulement volumétriqueet/ou la pression souhaitées.

2. Moyen selon la revendication 1, caractérisé en ce que sur la tige (113) entre les disques de vanne (111, 115), ainsi qu'entre le palier de support (106) ou un composant équivalent (108) fixé par rapport au corps (101) et un arrêt sur la tige, tel qu'un arrêt (116) qui est ajustable dans la direction de la tige, est placé au moins un ressort (117).

3. Moyen selon la revendication 1 ou 2, caractérisé en ce que le moyen de commande comprend, en prolongement de la tige (113), un corps (135) en fer mou, ou équivalent, et qu'à l'extrémité arrière du boitier de support (106) est fixé un solénoide (134) ou un autre élément équivalent, à l'intérieur duquel et/ou dans son voisinage immédiat le corps en fer mou a été monté de façon mobile, et que le solénoide a été relié à une source de puissance réglable, ce qui permet, lors de la fourniture d'un courant au solénoide, que celui-ci soit magnétisé, et agisse sur la tige, dirigeant sur celle-ci une force axiale d'une grandeur déterminée, et proportionnelle à l'intensité du courant.

4. Moyen selon la revendication 1 ou 2, caractérisé en ce que l'élément détecteur consiste en un solénoide (134) ou un élément équivalent attaché d'une manière fixe au boitier de support (106), ledit solénoide faisant partie d'un circuit d'oscillateur, et en un corps de ferrite (135) ou un autre corps ayant des propriétés magnétiques équivalentes, relié à la tige (113), et qui agit, sur la base de sa position, d'une manière connue en soi dans la technique, sur le solénoide de telle façon que la fréquence du circuit d'oscillateur varie et la position de la tige peut être déterminée en se basant là-dessus.

5. Moyen selon l'une quelconque des revendications précédentes, caractérisé en ce que le siège (110) associé au disque de vanne de contrôle (115) a été placé dans une gaine de siège (125) disposé dans le boitier de support (106) de façon que la position du siège par rapport au boitier de support (106) et à la tige mobile (115) soit ajustable.

6. Moyen selon la revendication 5, caractérisé en ce que dans le prolongement du boitier de support (106) se trouve un cylindre auxiliaire (139, 142) à l'intérieur duquel une gaine de siège (136, 143) a été disposée en partie de façon à se déplacer en direction de la tige (113) par l'intermédiaire d'un moyen de commande approprié.

7. Moyen selon la revendication 6, caractérisé en ce que sur la surface extérieure de la gaîne de siège (136) il y a un anneau de bride (137), muni de préférence d'une garniture (137'), reposant contre la surface intérieure du cylindre auxiliaire (139), et dans le volume intérieur dudit cylindre auxiliaire, à son extrémité opposée, dans le sens du mouvement de la tige (113), on a prévu des connecteurs (141a, 141b) pour un circuit pneumatique ou hydraulique, à partir duquel une pression pneumatique ou hydraulique peut être amenée à chaque côté de l'anneau de bride.

8. Moyen selon la revendication 6, caractérisé en ce qu'à une première extrémité du volume intérieur du cylindre auxiliaire (142) a été disposé un connecteur (147) pour un circuit pneumatique ou hydraulique, et qu'à l'autre extrémité du volume intérieur, entre l'anneau de bride (145) de la gaine de siège (143) et l'extrémité du cylindre auxiliaire, on a monté au moins un ressort (148).

9. Moyen selon la revendication 8, caractérisé en ce que le ressort (148) est un ressort bimétal.

10. Moyen selon l'une quelconque des revendications précédentes, caractérisé en ce qu'au prolongement (120, 212) du boitier de support (106) on a fixé un moyen de contrôle (200, 300, 400) constitué d'une buse (209, 303, 405) dont l'ouverture correspond au premier orifice ($d_1'$) du volume cylindrique, et d'un arrêt (205, 304, 402) devant cette ouverture, limitant la superficie de cette ouverture.

11. Moyen selon la revendication 10, caractérisé en ce que le moyen de contrôle (200) comprend une horloge (203), sous le contrôle de laquelle, à l'aide d'un moyen de contrôle approprié tel qu'un relais, l'arrêt (205) est adjustable à au moins deux distances de l'ouverture de la buse (209).

12. Moyen selon la revendication 11, caractérisé en ce que l'arrêt est une poulie en forme de disque (205) sur la circonférence de laquelle une encoche (205') a été prévue ou dont une partie de la circonférence a été enlevée, et ladite poulie pouvant tourner à l'aide d'un moyen de ressort mécanique, libéré par l'horloge (203), face à la buse (209), pour passer d'une première position dans une seconde position, l'encoche (205') s'éloignant alors de sa position face à la buse.

13. Moyen selon la revendication 10, caractérisé en ce que l'arrêt est une bande métallique (304), de préférence une bande bimétal, qui a été fixée, éloignée de la buse (303), au boitier (301) du moyen de contrôle, et entre le point de fixation et l'extrêmité libre de ladite bande, a été placée une vis de réglage (306) à l'aide de laquelle la distance de l'extrêmité libre de la bande (304) à l'orifice ($d_1'$) de la buse (303) est ajustable.

14. Moyen selon la revendication 10, caractérisé en ce que l'arrêt est un soufflet fermé (402) fixé au corps (401) du moyen de contrôle.

15. Moyen selon la revendication 14, caractérisé en ce que le soufflet (402) peut être connecté, à travers un connecteur (409), à un circuit pneumatique ou hydraulique, de sorte que sa longueur et en même temps la superficie de l'orifice ($d_1'$) de la buse (405) peuvent être ajustés à l'aide de la pression.

FIG. I

FIG. 3

FIG. 4

FIG. 6

FIG. 2

2

FIG. 5

FIG. 7

FIG. 9

$F_W = F_a + F_b + F_{mb} + F_p - F_v \pm \sin \gamma (F_g)$

FIG. 16

FIG. 10

FIG. 8

$M_{50}$  $M_{100}$

$F_{50}$

$M_4$

$M_3$

$M_2$

$M_1$

$F_{100}$

$F_W$  $F_{W_2}$  $F_{W_3}$

$F_{W_4}$

$M_{W_4}$

$F_{W_{W_4}}$

$F_{S_4}$

C

B

A

0  1  2  3  4  5  6  7  8  9  10  11 MM
OPENING

50

100

d  c  b  a

i

e  f  g

k  h  $V_1$

$V_4$  $V_2$  $V_3$

V = VOLUME FLOW %

FIG. 11

1.0
n

E  $n'_{100}$

0.5

$n_{50}$

D  $n_{100}$

$n = \dfrac{\overline{AB}}{\overline{AC}} = \dfrac{1}{\left(\dfrac{d_2}{d_1}\right)^4 + 1}$

0  1  2  3  4  5  6  7 MM
(4)                      (11)

q'

q

FIG. 12

EP 0 108 371 B1

FIG. 13

FIG. 14

FIG. 15

FIG. 16